# EUROPÄISCHE PATENTANMELDUNG

(11) **EP 2 385 535 A2**
(43) Veröffentlichungstag der Anmeldung: **09.11.2011**
(21) Anmeldenummer: 11161169.5
(22) Anmeldetag: 05.04.2011
(51) Int. Cl.: H01H 1/50, H01H 1/20, H02B 11/12

(54) **Kontaktmodul für eine Mittelspannungsanlage in Einschubtechnik**

(30) Priorität: 07.05.2010 DE 102010019881
(71) Anmelder: IDS-Technology GmbH, 54634 Bitburg (DE)
(72) Erfinder: Meyer, Johann, 54664 Preist (DE); Molitor, Reinhard, 54636 Wolsfeld (DE)
(74) Vertreter: Lenzing Gerber Stute

(57) **Zusammenfassung**

Die Erfindung betrifft ein schaltbares Kontaktmodul (1) zur Verbindung einer Stromschiene (P_{I}, P_{IV}) mit einem elektrischen Funktionsmodul (22), wobei das Kontaktmodul (1) mindestens ein dreh- und/oder verschiebbares und elektrisch leitendes Kontaktelement (5) aufweist, wobei in einer ersten Stellung des mindestens einen Kontaktelementes (5) eine elektrische Verbindung zwischen dem Kontaktelement (5) und einem elektrischen Anschlussleiter (16, 21) eines Funktionsmoduls (22) nicht besteht, und in einer zweiten Stellung eine elektrische Verbindung zum Funktionsmodul (22) besteht, und in der zweiten Stellung das Kontaktelement (5) gegen eine elektrische Kontaktfläche des Funktionsmoduls (22) kraftbeaufschlagt ist, wobei zumindest in der zweiten Stellung ein Formschluss (10, 11, 14, 15) zwischen Kontaktmodul (1) und Funktionsmodul (22) besteht.

## Beschreibung

Die vorliegende Erfindung betrifft ein schaltbares Kontaktmodul zur Verbindung einer Stromschiene mit einem elektrischen Funktionsmodul, wobei das Kontaktmodul mindestens ein dreh- und/oder verschiebbares und elektrisch leitendes Kontaktelement aufweist, wobei in einer ersten Stellung des mindestens einen Kontaktelementes eine elektrische Verbindung zwischen dem Kontaktelement und einem elektrischen Anschlussleiter eines Funktionsmoduls nicht besteht, und in einer zweiten Stellung eine elektrische Verbindung zum Funktionsmodul besteht, und in der zweiten Stellung das Kontaktelement gegen eine elektrische Kontaktfläche des Funktionsmoduls kraftbeaufschlagt ist.

Ein gattungsgemäßes Kontaktmodul ist aus EP 2102880 bekannt. Das gattungsgemäße Kontaktmodul zeichnet sich dadurch aus, dass eine elektrische Verbindung zwischen Stromschiene bzw. Phasenleiter und Funktionsmodul mittels eines Kontaktelementes hergestellt wird, welches hierzu um eine Achse herum verschwenkt wird. Um den Kontakt besser und sicher zu lösen, wird das Kontaktelement zumindest beim Öffnen des Kontaktmoduls um seine Längsachse verdreht, so dass evtl. festgebrannte Kontaktelemente sicher von der Kontaktfläche abgehoben werden können. Das gattungsgemäße Kontaktmodul ist so ausgelegt, dass zur Herstellung der elektrischen Verbindung die Kontaktelement lediglich verschwenkt werden. Eine Längsbewegung der Kontaktelemente parallel in Richtung der Flächennormalen der Kontaktfläche findet nicht statt. Hierdurch baut das gattungsgemäße Kontaktmodul vorteilhaft klein. Es wird in den Schaltschrank eingebaut, wonach dann die verschiedenartig ausgestalteten Funktionsmodule unmittelbar vor bzw. neben den Kontaktmodulen angeordnet werden. Gleichsam kann das gattungsgemäße Kontaktmodul dazu eingesetzt werden, eine elektrische Verbindung mit eine Kontaktstromschiene herzustellen.

Für den Einsatz in Mittelspannungsanlagen ist es notwendig, dass das schaltbare Kontaktmodul sicher an dem Funktionsmodul anliegt, an diesem befestigt oder in einem definierten Abstand zu diesem angeordnet ist.

Aufgabe der vorliegenden Erfindung ist es daher, das gattungsgemäße Kontaktmodul derart auszubilden, dass während des Betriebes, d.h. bei bestehender elektrischer Verbindung zwischen Phasenleitern und Funktionsmodul über das Kontaktmodul, das Kontaktelement des Kontaktmoduls aufgrund von Relativbewegungen der Module zueinander nicht den Kontakt zur Kontaktfläche des Funktionsmoduls verliert.

Diese Aufgabe wird vorteilhaft dadurch gelöst, dass bei dem gattungsgemäßen Kontaktmodul zumindest in der zweiten Stellung ein Formschluss zwischen Kontaktmodul und Funktionsmodul besteht.

Der Erfindung liegt der Gedanke zugrunde, dass in der zweiten Stellung des Kontaktelementes des Kontaktmoduls, in der die elektrische Verbindung zwischen Stromschiene bzw. Phasenleiter und dem Funktionsmodul besteht, durch einen Formschluss das Kontaktmodul und das Funktionsmodul daran gehindert sind, sich voneinander weg zu bewegen. Der Formschluss kann zusätzlich noch eine Anpresskraft erzeugen, mit der die Module gegen einander gepresst werden.

In einer bevorzugten Ausführungsvariante wird der Formschluss mit dem Verschwenken des bzw. der Kontaktelemente erzeugt. Somit ist vorteilhaft nur ein Antrieb bzw. ein Verschwenkvorgang notwendig, um den elektrischen Kontakt sowie den Formschluss herzustellen.

Da die die Kontaktelemente haltenden und verschwenkenden Kontaktelementhalteeinrichtungen auf einer verdrehbar gelagerten Welle angeordnet sind und auch über die Welle angetrieben werden, sieht die Erfindung vor, entweder eine oder alle Kontaktelementehalteeinrichtung(-en) oder ein gesondertes, ebenfalls auf der Welle angeordnetes Formschlussteil zur Bildung des Formschlusses zu verwenden. Selbstverständlich ist es möglich, dass gesonderte Formschlussteile zur Bildung des Formschlusses über ein zusätzliches Getriebe und mittels eines gesonderten Handantriebs oder maschinellen Antriebs angetrieben werden können. Hierdurch wird jedoch zusätzlicher Platz benötigt, was sich nachteilig auf den Bauraum der Kontaktmodule auswirkt.

Vorteilhaft ist am Funktionsmodul ein Widerlagerelement angeordnet, welches zusammen mit dem mindestens einen Formschlussteil oder der Kontaktelementehalteeinrichtung den Formschluss bildet. Das Widerlagerelement ist vorteilhaft am elektrischen Leiter des Funktionsmoduls angeordnet, insbesondere befestigt, so dass der Formschluss möglichst nahe an der Kontaktstelle zwischen Kontaktfläche und Kontaktelement erzeugt wird. Da in der Regel Funktionsmodule eine genormte Anschlussschnittstelle nebst elektrischem Verbindungsleiter aufweisen, kann der an das erfindungsgemäße Kontaktmodul angepasste und die Kontaktfläche bildende Leiter an der Anschlussschnittstelle befestigt werden. Der Leiter kann dabei so ausgeformt sein, dass er bereits das Widerlagerelement bildet. Im einfachsten Falle ist jedoch das Widerlagerelement an dem seinerseits an der Anschlussschnittstelle zu befestigenden Leiter befestigt.

Das Funktionsmodul kann z.B. ein Leistungsschalter, ein Vakuumschalter, SF6-Schalter, ein Schütz oder eine Sicherung sein.

Nachfolgend wird anhand von Zeichnungen das erfindungsgemäße Kontaktmodul näher beschrieben.

Es zeigen:
- Fig. 1:: Perspektivische Ansicht des erfindungsgemäßen Kontaktmoduls;
- Fig. 1a:: Querschnittsdarstellung durch das Kontaktmodul gemäß Figur 1;
- Fig. 1b:: Querschnittsdarstellung durch das Kontaktmodul gemäß Figur 1 mit in Position zum Kontaktmodul angeordnetem Kontaktleiter, welcher die Kontaktfläche für die Kontaktelemente des Kontaktmoduls bildet;
- Fig. 2:: Querschnittsdarstellung durch das Kontaktmodul gemäß Figur 1 mit daneben platziertem Funktionsmodul, wobei das Kontaktmodul in der ersten Stellung, welche der "Geöffnet"-Stellung entspricht, geschaltet ist;
- Fig. 3:: Kontaktmodul und Funktionsmodul gemäß Figur 2, wobei das Kontaktmodul in der zweiten Stellung, welche der "Kontakt"-Stellung entspricht, geschaltet ist;
- Fig. 4:: Teile eines Schaltschrankes mit eingebauten Stromschienen und Kontaktmodulen;
- Fig. 5:: Schaltschrank gemäß Figur 4 mit zusätzlichen Verblendungen und Seitenwänden;
- Fig. 6:: perspektivische Rückansicht auf den Schaltschrank gemäß Figur 4.

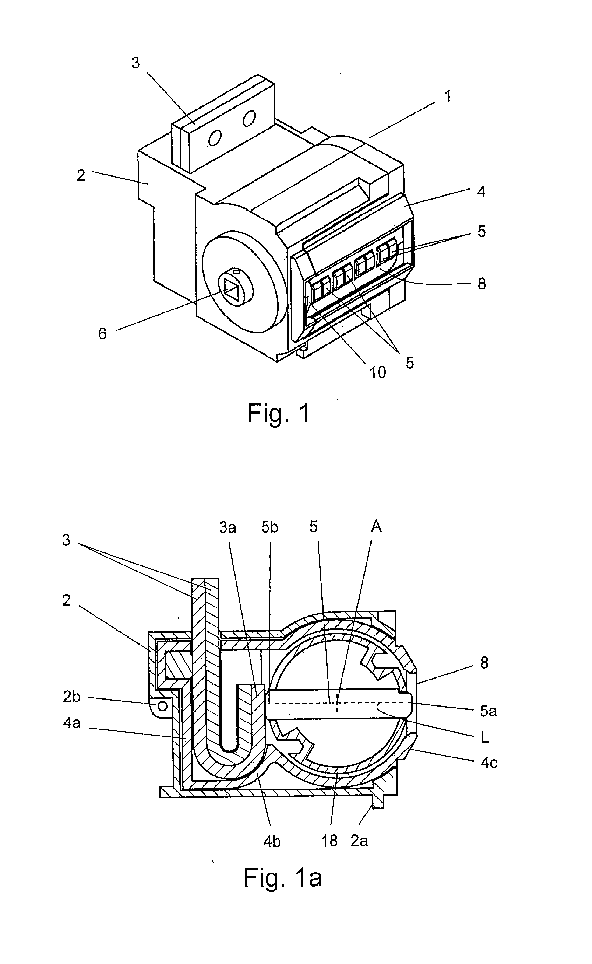

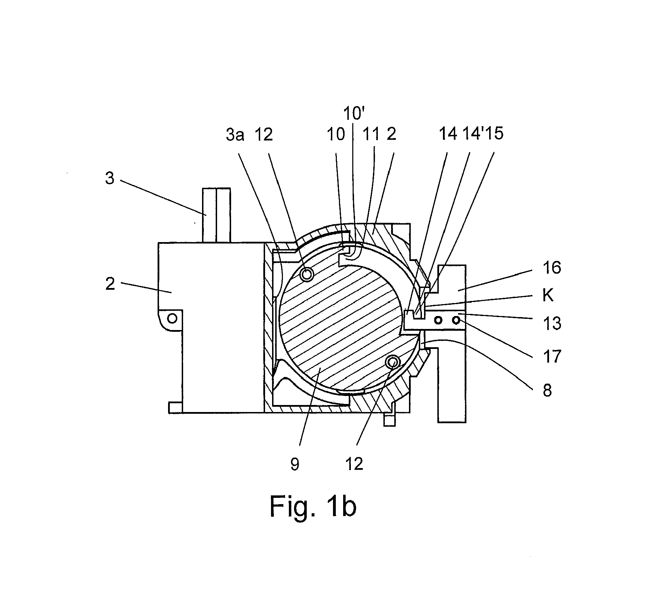

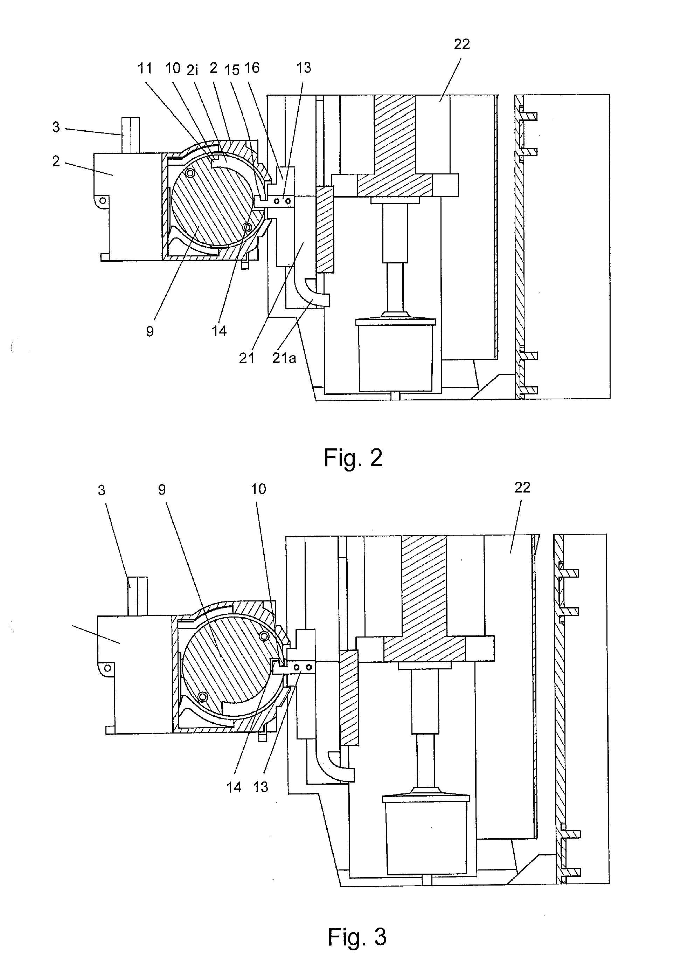

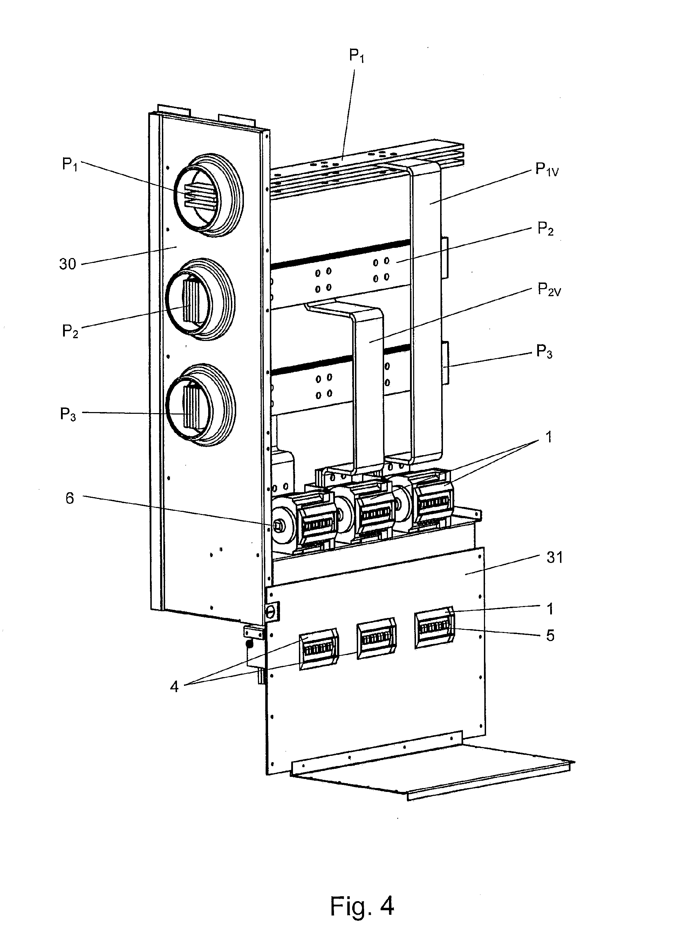

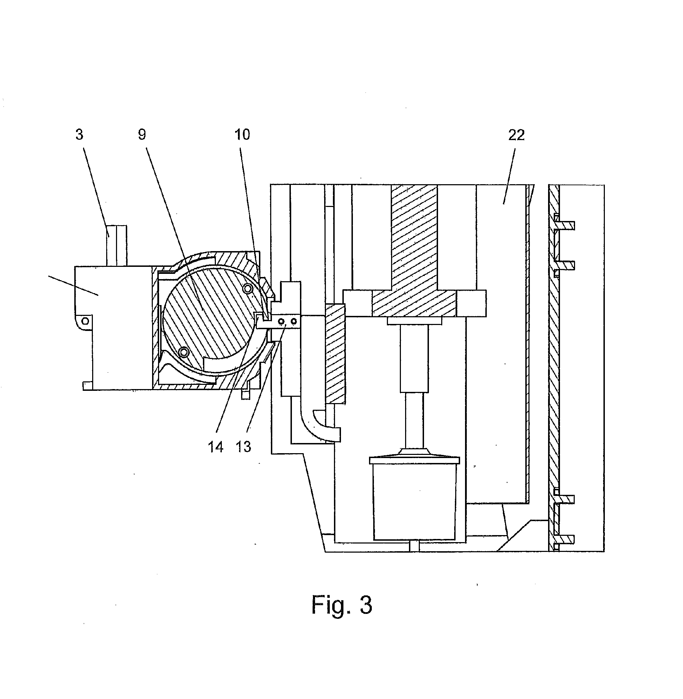

Die Figur 1 zeigt eine perspektivische Ansicht des erfindungsgemäßen Kontaktmoduls 1. Das Kontaktmodul 1 weist ein Gehäuse 2 auf, aus dem aus der hinteren oberen Wandung ein Leiterstück 3 zur Befestigung einer elektrischen Verbindungsschiene P_{IV}, welche in den Figuren 4 bis 6 dargestellt ist, dient. An der Frontseite weist das Kontaktmodul 1 eine fensterartige Öffnung 8 auf, welche nicht mittels eines Vorhangs - auch Shutter genannt - verschlossen werden muss, da durch das Verschwenken der Kontaktelemente 5 in die erste Stellung bereits ein hinreichender Berührungsschutz zu evtl. unter Spannung stehenden Teilen des Kontaktmoduls 1 sicher gestellt ist. Das Kontaktmodul 1 ist in Figur 1 in der zweiten Stellung, d.h. "Kontaktstellung", dargestellt. In dieser Stellung sind die Kontaktflächen der Kontaktelemente 5 durch die Öffnung 8 zu erkennen. Das dargestellte Kontaktmodul 1 weist acht nebeneinander angeordnete Kontaktelemente 5 auf, die zur Verbindung der an den Leiter 3 anschließbaren Stromschiene P_{I} und dem in den Figuren 2 und 3 dargestellten Funktionsmodul 22 dienen.

An der Seite neben den Kontaktelementen 5 ist der Vorsprung 10 zu erkennen, welcher zur Bildung eines Formschlusses mit dem Funktionsmodul 22 dient. Dieser Vorsprung kann zahnförmig oder hakenförmig ausgebildet sein.

Die Figur 1a zeigt eine Querschnittsdarstellung durch das Kontaktmodul 1 gemäß Figur 1. In dem Gehäuse 2 ist ein Einsatz 4 angeordnet, in dem der gebogene Leiter 3 sowie die Kontaktelementhalteeinrichtung 18 angeordnet ist. Der Einsatz 4 bildet mit seinem vorderen, aus dem Gehäuse 2 herausragenden Bereich 4c die fensterartige Öffnung 8. Mittels der innen liegenden Bereichen 4a, 4b ist der gebogene Leiter 3 in Position gehalten. Das freie Ende 3a des gebogenen Leiters 3 bildet eine federnde Kontaktfläche für das eine ende 5b des Kontaktelementes 5. Dabei kann das freie Ende 3a geschlitzt sein, so dass bei mehreren nebeneinander angeordneten Kontaktelementen 5 dies jeweils gegen eine einzelne Lippe 3a drücken und somit sicher gestellt ist, dass jedes Kontaktelement 5 sicheren Kontakt zu dem Leiter 3 hat.

Mittels der Kontaktelementhalteeinrichtung 18 wird das Kontaktelement 5 um die Achse A herum in die erste oder zweite Stellung verschwenkt. Das Kontaktmodul 1 ist in der Figur 1a in der zweiten Stellung dargestellt, so dass die Kontaktfläche 5a des Kontaktelementes 5 in die fensterartige Öffnung 8 hineinragt und mit eine in Figur 1b dargestellten Kontaktfläche eines Anschlussleiters 16 kontaktiert. Mittels nicht dargestellter Führungsflächen wird beim Verschwenken des Kontaktelementes 5 dieses um seine Längsachse L herum verdreht.

Nicht dargestellt ist der Antrieb bzw. das Getriebe zum Verstellen der Kontaktelementhalteeinrichtung 18.

Die Figur 1b zeigt eine Querschnittsdarstellung durch das Kontaktmodul 1 gemäß Figur 1 mit in Position zum Kontaktmodul angeordnetem Kontaktleiter 16, welcher die Kontaktfläche K für das Kontaktelement5 des Kontaktmoduls 1 bildet. Der nicht dargestellte Antrieb für die Kontaktelementhalteeinrichtung 18 treibt ebenfalls das Formteil 9 mit an, welches eine Ausnehmung 11 und einen zahnförmigen Vorsprung 10 zur Bildung des Formschlusses aufweist. Das Formteil 9 ist mittels Schrauben 12 an einer daneben angeordneten Kontaktelementhalteeinrichtung 18 befestigt und dreht sich mit dieser. An dem Kontaktleiter 16 ist das Widerlagerelement 13 mittels Schrauben, Nieten oder Verschweißungen 17 befestigt und ragt mit seinem Vorsprung 14 und Rücksprung 15 in die Bewegungsbahn des Vorsprungs 10 des Formteils 9. Sobald nun die Kontaktelemente 5 in die zweite Stellung verschwenkt werden, greift der Vorsprung 10 in die Ausnehmung bzw. den Rücksprung 15 ein, wodurch ein Formschluss entsteht, welcher in horizontaler Richtung wirkt und somit verhindert, dass die Kontaktelementhalteeinrichtung 18 sich nicht weiter von dem Funktionsmodul bzw. dem Kontaktleiter 16 wegbewegen kann. Das Kontaktelement 5 ist somit stets in einem definierten Abstand zum Kontaktleiter 16, wodurch ein sicherer elektrischer Kontakt gewährleistet ist.

Der Wandung 10' des Vorsprungs 10 bzw. die Rücksprungflanke 14' können leicht schräg ausgebildet sein, so dass zumindest in der Endstellung die Wandung 10' an der Rücksprungflanke 14' sicher anliegt und evtl. eine Andruckkraft zwischen Funktionsmodul 22 und Kontaktmodul 1 entsteht.

Die Figuren 2 und 3 zeigen jeweils eine Querschnittsdarstellung durch das Kontaktmodul 1 mit daneben platziertem Funktionsmodul 22, wobei das Kontaktmodul 1 in Figur 2 in die erste Stellung, welche der "Geöffnet"-Stellung entspricht, und in Figur 3 in die "Kontakt"-Stellung geschaltet ist. Das Funktionsmodul 22 hat eine Anschlussschnittstelle in Form eines elektrischen Leiters 21, an dem der Kontaktleiter 16 befestigt ist. Der elektrische Leiter 21 ist über den Leiteranschluss 21a mit im Inneren des Funktionsmoduls 22 angeordneten elektrischen Komponenten verbunden. In den Figuren 2 und 3 ist das Funktionsmodul 22 beispielhaft als Leistungsschalter dargestellt.

In der Figur 3 ist der Formschluss zwischen dem Kontaktmodul 1 und dem Funktionsmodul 22 durch das Eingreifen des Vorsprungs 10 in den Rücksprung 15, sowie das Eingreifen des Vorsprungs 14 in den Rücksprung 11 gebildet.

Die Figur 4 zeigt Teile eines Schaltschrankes mit eingebauten Stromschienen P₁, P₂, P₃ und den Verbindungsschienen P_{1V}, P_{2V} zur Verbindung der Stromschienen P₁ mit den Kontaktmodulen 1. Die Stromschienen P_{I} sind seitlich durch die Schrankwand 30 in den Schaltschrank durchgeführt. Die Kontaktmodule 1 sind hinter einer Schutzwand 31 angeordnet, welche Öffnungen aufweist, durch die die Kontaktmodule mit ihren Frontseiten 7 hindurch ragen. Die Kontaktmodule 1 werden fest mit ihrem Gehäuse 2 im Schaltschrank angeordnet und müssen nicht mittels einem Antrieb bewegt werden. Die Kontaktmodule 1 sind von ihren Abmessungen klein, wodurch vorteilhaft mehr Platz für andere Komponenten im Schaltschrank bereitsteht.

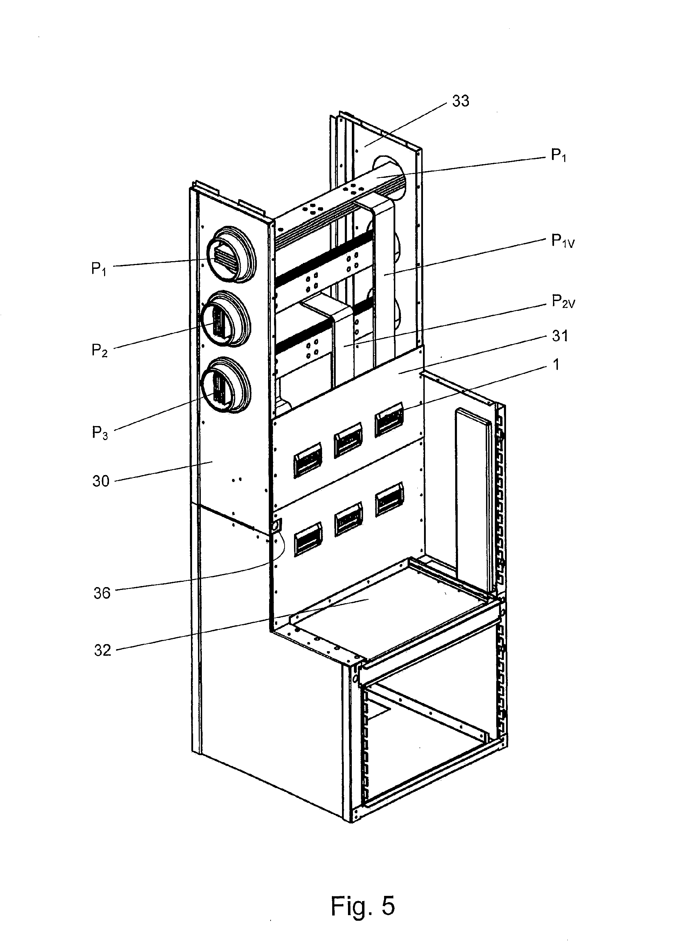

Die Figur 5 zeigt den Schaltschrank gemäß Figur 4 mit zusätzlichen Verblendungen und Seitenwänden 33. Die Wandung 31 weist eine weitere Durchgriffsöffnung 36 auf, durch die eine Antriebsstange hindurchgeführt werden kann, welche zur Verstellung der Kontaktelementhalteeinrichtung(en) 18 dient.

Im Bereich 32 kann mindestens ein Funktionsmodul 22 angeordnet werden, welches z.B. auf einfachen Rollen oder Schienen gelagert und hiermit in Position gebracht werden kann. Ein zusätzlicher Antrieb für das Bewegen des bzw. der Funktionsmodule 22, wie er in herkömmlichen Schaltschränken notwendig war, ist durch den Einsatz der erfindungsgemäßen Kontaktmodule nicht mehr notwendig.

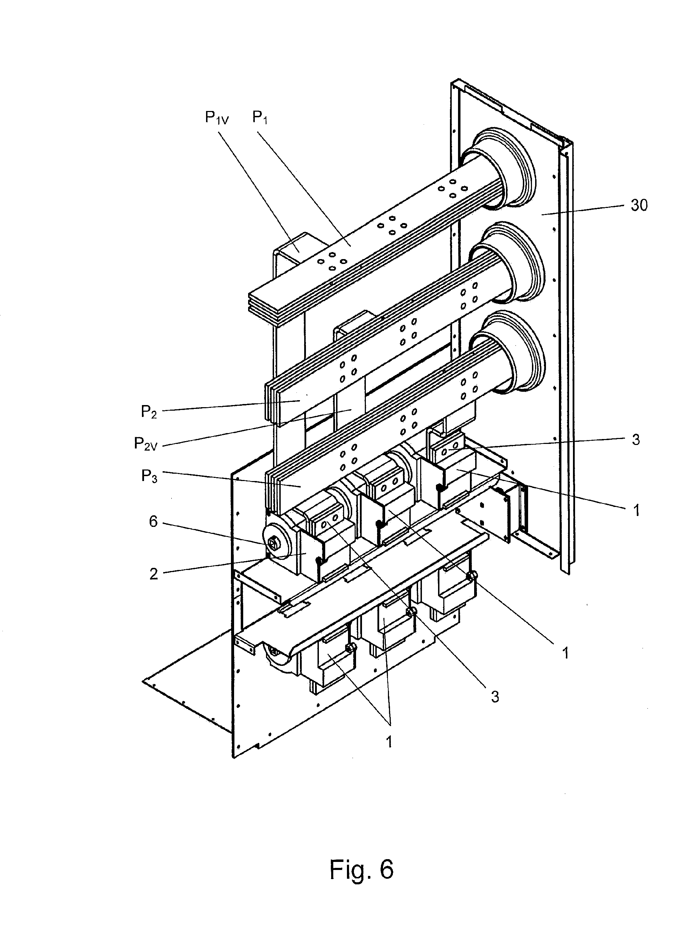

Hierdurch können von der Vorderseite des Schaltschrankes die Kontaktmodule 1 geschaltet zwischen der ersten und zweiten Stellung hin und her geschaltet werden. Die Figur 6 zeigt zur Vervollständigung eine perspektivische Rückansicht auf den Schaltschrank gemäß der Figuren 4 und 5.

## Patentansprüche

1. Schaltbares Kontaktmodul (1) zur Verbindung einer Stromschiene (P₁, P_{IV}) mit einem elektrischen Funktionsmodul (22), wobei das Kontaktmodul (1) mindestens ein dreh- und/oder verschiebbares und elektrisch leitendes Kontaktelement (5) aufweist, wobei in einer ersten Stellung des mindestens einen Kontaktelementes (5) eine elektrische Verbindung zwischen dem Kontaktelement (5) und einem elektrischen Anschlussleiter (16, 21) eines Funktionsmoduls (22) nicht besteht, und in einer zweiten Stellung eine elektrische Verbindung zum Funktionsmodul (22) besteht, und in der zweiten Stellung das Kontaktelement (5) gegen eine elektrische Kontaktfläche des Funktionsmoduls (22) kraftbeaufschlagt ist, **dadurch gekennzeichnet, dass** zumindest in der zweiten Stellung ein Formschluss (10, 11, 14, 15) zwischen Kontaktmodul (1) und Funktionsmodul (22) besteht.

2. Schaltbares Kontaktmodul nach Anspruch 1, **dadurch gekennzeichnet, dass** vor, während und/oder beim Bewegen des Kontaktelementes (5) von der ersten in die zweite Stellung ein Formschluss (10, 11, 14, 15) zwischen Kontaktmodul (1) und Funktionsmodul (22) entsteht.

3. Schaltbares Kontaktmodul nach Anspruch 1 oder 2, **dadurch gekennzeichnet, dass** der Formschluss (10, 11, 14, 15) zumindest in Richtung der Flächennormale der Kontaktfläche des Funktionsmoduls (22) oder der Andruckkraft des Kontaktelementes (5) auf die Kontaktfläche wirkt.

4. Schaltbares Kontaktmodul nach einem der Ansprüche 1 bis 3, **dadurch gekennzeichnet, dass** das mindestens eine Kontaktelement (5) in einer Kontaktelementhalteeinrichtung (18) gelagert ist, welche verdreh- bzw. verschwenkbar, insbesondere auf einer Welle, gelagert und zwischen einer ersten Stellung und einer zweiten Stellung hin und her bewegbar ist.

5. Schaltbares Kontaktmodul nach Anspruch 4, **dadurch gekennzeichnet, dass** die Kontaktelementhalteeinrichtung (18) beim Bewegen des Kontaktelementes (5) von der zweiten Stellung in die erste Stellung das Kontaktelement (5) um eine Achse herum, insbesondere um die Längs- bzw. Verbindungsachse des Kontaktelementes (5), verdreht.

6. Schaltbares Kontaktmodul nach Anspruch 4 oder 5, **dadurch gekennzeichnet, dass** das Kontaktmodul (1) mehrere Kontaktelementhalteeinrichtungen (18) mit jeweils mindestens einem Kontaktelement (5) aufweist.

7. Schaltbares Kontaktmodul nach Anspruch 6, **dadurch gekennzeichnet, dass** die mindestens eine Kontaktelementhalteeinrichtung (18) über ein Getriebe manuell oder mittels eines Antriebes bewegbar ist.

8. Schaltbares Kontaktmodul nach einem der vorhergehenden Ansprüche, **dadurch gekennzeichnet, dass** mindestens eine Kontaktelementhalteeinrichtung (18) und/oder mindestens ein mit der mindestens einen Kontaktelementhalteeinrichtung (18) oder einem Kontaktelement (5) zusammen angetriebenes Formschlussteil (9) den Formschluss (10, 11, 14, 15) zusammen mit mindestens einem jeweils korrespondierenden Widerlagerelement des Funktionsmoduls (22) bildet.

9. Schaltbares Kontaktmodul nach Anspruch 8, **dadurch gekennzeichnet, dass** die Kontaktelementhalteeinrichtung (18) bzw. das Formschlussteil (9) einen nasenförmig oder hakenförmig ausgebildeten Bereich (10, 11) aufweist, und dieser mit einem Hinterschnitt oder einer Aussparung (15) des Widerlagerelementes (13) zur Bildung des Formschlusses (10, 11, 14, 15) in der zweiten Stellung des bzw. der Kontaktelemente(s) (5) bildet.

10. Schaltbares Kontaktmodul nach Anspruch 9, **dadurch gekennzeichnet, dass** das Widerlagerelement (13) und/oder der nasenförmig oder hakenförmig ausgebildete Bereich (10, 11) des Kontaktmoduls (1) eine schräge ausgebildete Führungsfläche aufweiset bzw. aufweisen, derart, dass nach dem Hintergreifen und Bilden des Formschlusses (10, 11, 14, 15) die Module (1, 22) zueinander bewegt oder aneinander gedrückt werden.

11. Schaltbares Kontaktmodul nach Anspruch 9 oder 10, **dadurch gekennzeichnet, dass** das Widerlagerelement (13) an einem die Kontaktfläche für das Kontaktelement (5) bildenden elektrischen Leiter (16) des Funktionsmoduls (22) angeordnet, insbesondere angenietet, angeschweißt oder angeschraubt, ist.

12. Schaltbares Kontaktmodul nach Anspruch 10, **dadurch gekennzeichnet, dass** das Widerlagerelement (13) an dem Gehäuse des Funktionsmoduls (22) angeordnet, insbesondere angenietet, angeschweißt oder angeschraubt, oder angeformt ist.

13. Schaltbares Kontaktmodul nach einem der vorhergehenden Ansprüche, **dadurch gekennzeichnet, dass** mit der Bildung des Formschlusses (10, 11, 14, 15) eine Kraft entsteht, die das Kontaktmodul (1) oder Teile davon, insbesondere das mindestens eine Kontaktelement (5), in der zweiten Stellung gegen das Funktionsmodul (5), insbesondere gegen die Kontaktfläche, druckbeaufschlagt.

14. Schaltbares Kontaktmodul nach einem der vorhergehenden Ansprüche, **dadurch gekennzeichnet, dass** durch den Formschluss (10, 11, 14, 15) das Kontaktmodul (1) oder Teile davon in einem maximalen Abstand zu dem Funktionsmodul (22) gehalten ist.

15. Schaltbares Kontaktmodul nach einem der vorhergehenden Ansprüche, **dadurch gekennzeichnet, dass** das Widerlagerelement (13) in das Kontaktmodul (1), insbesondere in eine fensterartige Ausnehmung (8), hineinragt, sobald das Funktionsmodul (22) und das Kontaktmodul (1) zueinander positioniert sind.

16. Schaltbares Kontaktmodul nach einem der vorhergehenden Ansprüche, **dadurch gekennzeichnet, dass** in der ersten Stellung des mindestens einen Kontaktelementes (5) kein Formschluss zwischen Kontaktmodul (1) und Funktionsmodul (22) besteht.
